Europäisches Patentamt

European Patent Office

Office européen des brevets

(11) Numéro de publication: **0 317 463 B1**

## FASCICULE DE BREVET EUROPEEN

(45) Date de publication de fascicule du brevet: **30.12.92**

(51) Int. Cl.⁵: **H04M 3/56**, G06F 7/50, G06F 5/00

(21) Numéro de dépôt: **88460026.3**

(22) Date de dépôt: **27.10.88**

(54) **Circuit de mise en conférence d'une pluralité de participants dans des systèmes de télécommunications.**

(30) Priorité: **20.11.87 FR 8716315**

(43) Date de publication de la demande:
**24.05.89 Bulletin 89/21**

(45) Mention de la délivrance du brevet:
**30.12.92 Bulletin 92/53**

(84) Etats contractants désignés:
**AT BE CH DE ES GB GR IT LI LU NL SE**

(56) Documents cités:
EP-A- 0 135 383    DE-A- 2 832 579
DE-A- 3 226 430    FR-A- 1 590 105
GB-A- 2 082 875    US-A- 4 719 618

PATENT ABSTRACTS OF JAPAN, vol. 9, no. 31 (E-295)[1754], 9 février 1985, page 96 E 295 & JP-A-59 175 264

(73) Titulaire: **SOCIETE PRESCOM SARL**
**5, rue Michael-Faraday**
**F-78180 Montigny-Le-Bretonneux(FR)**

(72) Inventeur: **Damany, Yves**
**Le Rhu en Servel**
**F-22300 Lannion(FR)**

(74) Mandataire: **Le Guen, Louis François**
**CABINET Louis LE GUEN 38, rue Levavasseur**
**B.P. 91**
**F-35802 Dinard Cédex(FR)**

Rank Xerox (UK) Business Services

## Description

La présente invention concerne un circuit de mise en conférences utilisable dans des systèmes de télécommunications et, plus particulièrement, des systèmes téléphoniques.

Dans les systèmes téléphoniques, on utilise un circuit de conférence pour connecter ensemble plus de deux participants. La fonction du circuit de conférence est d'envoyer à chacun des participants la somme des signaux de parole provenant de chacun des autres participants.

On connaît déjà de tels circuits de conférence effectuant les sommes de signaux vocaux en utilisant les signaux analogiques représentant ces signaux vocaux. Quand le réseau de commutation auquel appartient le circuit de conférence est un réseau à commutation temporelle, les signaux vocaux sont disponibles sous forme numérique. L'addition de signaux analogiques requiert alors une première conversion numérique/analogique, puis l'addition analogique et, enfin, une seconde conversion analogique/numérique. Toutefois, les conversions successives entraînent évidemment des dégradations des signaux.

On a donc recherché à réaliser l'addition des signaux numériques directement. Toutefois, les signaux temporels sont, suivant les normes internationales, des signaux MIC (à modulation par impulsions codées) non linéaires. L'addition directe des signaux n'est donc pas possible.

Dans certains systèmes, on a tourné ce problème en ne traitant que le signal ou les deux signaux les plus forts, le traitement étant effectué en mode compressé. Par exemple, dans une conférence à cinq participants, chacun reçoit le plus fort ou les deux plus forts niveaux des quatre autres participants. Ces systèmes souffrent de plusieurs inconvénients. Tout d'abord, ils ne réalisent pas une véritable conférence et, d'autre part, ils utilisent des commutations, après avoir déterminé, le ou les deux plus forts niveaux, ce qui entraîne également des distorsions.

Dans d'autres systèmes, on a proposé de linéariser d'abord les signaux numériques, puis de les ajouter convenablement et, enfin, de les recoder tout en conservant leur caractère temporel. De tels systèmes sont décrits dans les brevets US n° 3 924 082 et n° 4 190 744. Dans ces deux brevets, il est prévu d'effectuer les additions des échantillons linéarisés en mode parallèle. Dans le brevet US n° 3 924 082, on utilise un registre à décalage à n étages dans lequel les échantillons sont successivement décalés, (n-1) sorties parallèles délivrant à chaque décalage les échantillons à additionner. Comme l'indique l'exemple de réalisation décrit, le nombre de cellules du registre à décalage limite le nombre de participants à la conférence. Dans le brevet US n° 4 190 744, on prévoit de faire circuler successivement les échantillons à ajouter dans (n-1) mémoires s'il y a n participants, chaque mémoire devant avoir la capacité d'un supermultiplex de trames MIC. En pratique, les places occupées successive-ment dans les mémoires par les échantillons constituent aussi un registre à décalage. Il est bien évident que multiplier le nombre de mémoires de grande capacité conduit à un système de conférence d'un coût prohibitif dès que le nombre maximal de participants est important. D'autre part, les mémoires sont mal utilisées car chacune ne contient qu'un échantillon à la fois.

Dans le document JP-A-59 175 264, un circuit de mise en conférence est tel qu'à chaque participant, sont affectés des portes dont les premières entrées reçoivent les signaux des participants, dont les secondes entrées sont reliées à un circuit de sélection et dont les sorties sont reliées à un additionneur.

Un objet de la présente invention consiste à prévoir un circuit de conférence de signaux temporels de ce dernier type, c'est-à-dire impliquant la linéarisation des signaux avant addition, puis la compression de la somme obtenue.

Suivant une caractéristique de l'invention, il est prévu un circuit de mise en conférences d'une pluralité de participants dont les signaux émis sont numérisés linéairement, dans lequel lesdits signaux numérisés linéairement sont arrangés en trames temporelles et portés sur une pluralité de multiplex temporels, à chaque participant étant affecté un circuit de participant qui comprend un circuit de sélection d'échantillons, un additionneur arithmétique et un circuit de conversion de la somme numérique délivrée par l'additionneur en signal de parole transmis au participant correspondant, le circuit de sélection d'échantillons comportant autant de circuits portes que de multiplex temporels, lesdits circuits portes étant ouverts sélectivement à des instants déterminés dans chaque trame temporelle pour sélecter dans la pluralité de multiplex temporels les échantillons qui proviennent des autres participants, le circuit de sélection d'échantillons est couplé à un circuit de commande à mémoire dont la sortie commande les instants d'ouverture des circuits portes du circuit de sélection d'échantillons, le contenu de la mémoire du circuit de commande à mémoire étant modifiable, le circuit d'addition comprend un additionneur qui a autant d'entrées que de multiplex temporels, plus une dernière, et les échantillons étant appliqués aux entrées correspondantes en série avec leurs bits de poids faible en tête, les bits de même poids étant additionnés au cours d'un temps bit et le bit de poids le plus faible de la somme partielle obtenue étant appliqué à la dernière entrée de l'additionneur au temps échantillon suivant, et le reste de la somme partielle étant divisée par deux et ajoutée à la somme des bits additionnés au temps bit suivant, l'additionneur délivrant ladite somme numérique une fois les bits de poids le plus fort additionnés.

La caractéristique de l'invention mentionnée ci-dessus, ainsi que d'autres, apparaîtra plus clairement à la lecture de la description suivante d'un exemple de réalisation, ladite description étant faite en relation avec les dessins joints, parmi lesquels:

la Fig. 1 est le bloc-diagramme général d'un système de conférence suivant l'invention,

la Fig. 2 est un bloc-diagramme montrant un groupe de circuits de conférence d'abonné,

la Fig. 3 est le bloc-diagramme du circuit de sélection et du circuit d'addition d'échantillon d'un circuit de conférence d'abonné,

la Fig. 4 est un diagramme temporel illustrant un faisceau de multiplex portant des échantillons de paroles d'abonnés, utilisé dans le système de l'invention,

la Fig. 5 est le schéma du circuit d'addition d'échantillons de la Fig. 3,

la Fig. 6 est un organigramme illustrant le fonctionnement du circuit d'addition de la Fig. 4, et

la Fig. 7 montre des diagrammes temporels de signaux utilisés dans les circuits de la Fig. 3.

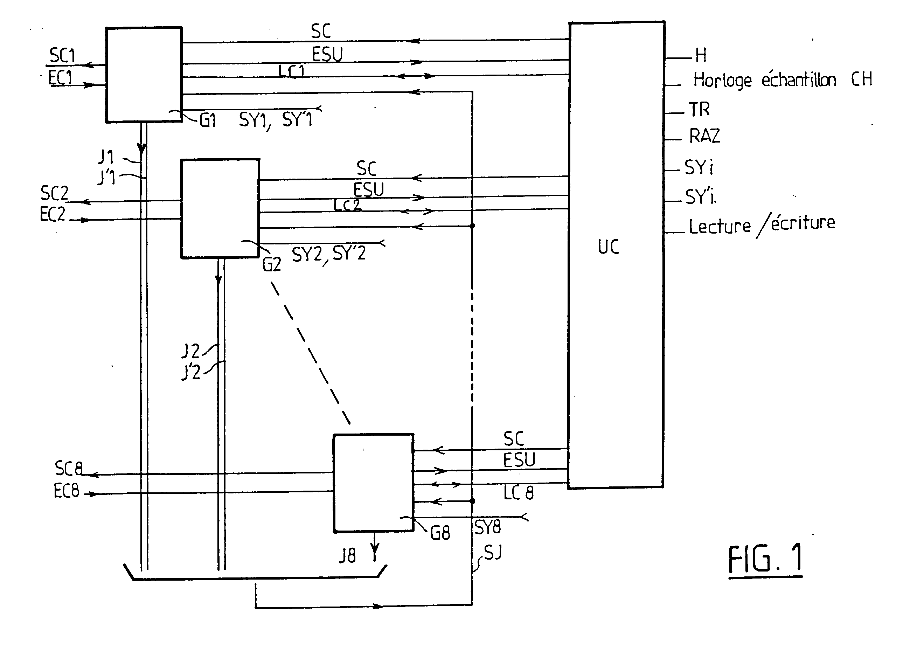

Le système de conférence de la Fig. 1 comprend des groupes G1 à G8 de circuits de conférence d'abonné et une unité de commande UC.

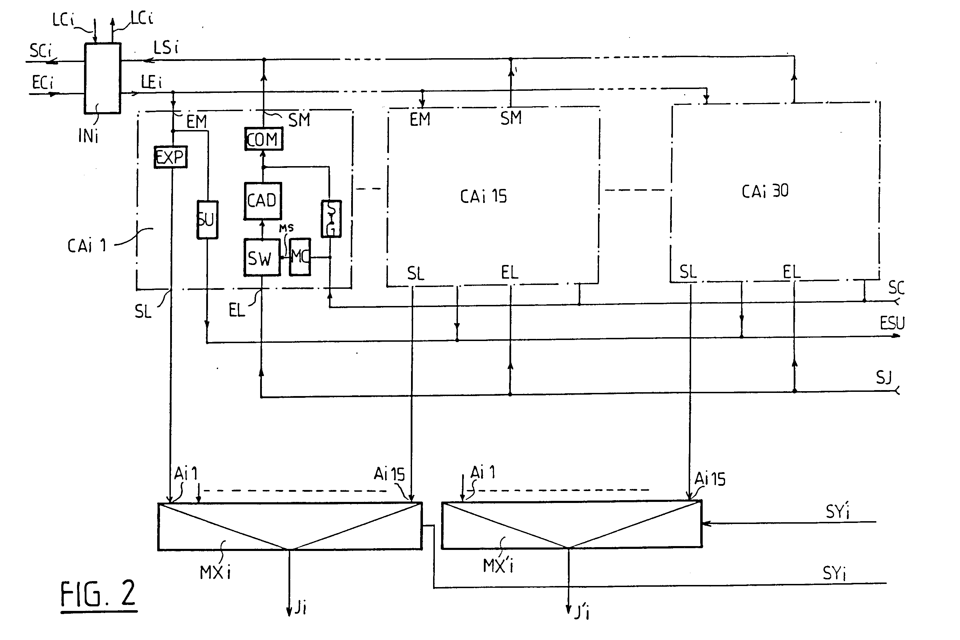

Comme le montre la Fig. 2, un groupe Gi de circuits de conférence d'abonné comprend un circuit d'interface INi, trente circuits de conférence d'abonné CAi.1 à CAi.30, et deux multiplexeurs locaux MXi et MX'i. Le circuit d'interface INi a, d'un côté, une entrée reliée à un multiplex MIC entrant ECi et une sortie reliée à un multiplex MIC sortant SCi et, de l'autre côté, une sortie reliée à une ligne d'entrée LEi et une entrée reliée à une ligne de sortie LSi. De plus, le circuit d'interface INi a des lignes de commande LCi pour communiquer avec l'unité de commande UC, Fig. 1.

Le circuit INi reçoit le multiplex MIC entrant sur ECi, en tire des informations qu'il transmet à l'unité de commande UC par les lignes LCi, et, par trame MIC, délivre en série sur la ligne LEi trente des échantillons de parole qui sont respectivement destinés aux trente circuits CAi.1 à CAi.30. Dans le sens sortant, La ligne de sortie LSi sert à transmettre en série, par trame MIC, trente échantillons de parole respectivement délivrés par les circuits CAi.1 à CAi.30 et le circuit INi arrange les échantillons ainsi reçus en une trame MIC en y ajoutant la signalisation classique.

Chaque circuit de conférence d'abonné CAi.j est attribué, pendant le temps d'une conférence, à un abonné. Tous les circuits CAi.1 à CAi.30 sont identiques et on décrira, à titre d'exemple, le schéma du circuit CAi.1. Celui-ci a, d'un côté, une entrée d'échantillon MIC EM reliée à la ligne LEi et une sortie d'échantillon MIC SM reliée à la ligne de sortie LSi. Dans le circuit CAi.1, l'entrée EM est reliée, d'une part, à l'entrée d'un circuit de linéarisation EXP et, d'autre part, à un circuit de supervision d'entrée SU. La sortie du circuit de linéarisation EXP est reliée, par la sortie SL du circuit CAi.1, à l'entrée Ai.1 du multiplexeur MXi.

Le circuit EXP convertit chaque échantillon MIC en un échantillon à seize bits codé linéairement en complément à deux, dont treize bits représentent l'amplitude de l'échantillon.

La sortie du circuit SU est reliée à l'unité de commande UC par une ligne ESU multiplée sur tous les circuits SU des circuits d'abonnés CAi.1 à CAi.30. Le circuit SU sert à extraire des signaux de service qui sont traités par l'unité de commande. Les signaux de service sont, par exemple, des signaux multifréquences.

Pour des raisons pratiques, on a groupé les circuits de conférence d'abonné en deux groupes de quinze, l'un comprenant les circuits CAi.1 à CAi.15 et l'autre les circuits CAi.16 à CAi.30. Les sorties des circuits EXP appartenant au premier groupe sont reliées aux entrées Ai.1 à Ai.15 du multiplexeur MXi, et les sorties des circuits EXP appartenant au second groupe sont reliées aux entrées Ai.1 à Ai.15 du multiplexeur MX'i.

Les multiplexeurs MXi et MX'i réalisent les multiplexages des échantillons linéarisés reçus à leurs entrées, sous la commande de l'unité de commande UC à laquelle ils sont reliés par les lignes de synchronisation SYi et SY'i. Les multiplex locaux créés par les multiplexeurs MXi et MX'i sont respectivement délivrés sur les jonctions Ji et J'i qui constituent les sorties de données du groupe Gi. Dans l'exemple de réalisation décrit, le groupe G8 ne comprend qu'un seul groupe de quinze circuits de conférence d'abonné CA8.1 à CA8.15, qu'un seul multiplexeur MX8 et qu'une seule jonction de sortie J8.

Dans l'exemple particulier montré à la Fig. 1, les jonctions J1 à J8 et J'1 à J'7 des groupes G1 à G8 sont reliées en parallèle à l'entrée de données de chaque groupe de circuits de conférence d'abonné Gi. Pour rendre le dessin plus clair, on a rassemblé les jonctions J1 à J8 et J'1 à J'7 en un seul faisceau SJ.

A la Fig. 2, il apparaît que le faisceau SJ est multiplé sur les entrées EL de chaque circuit de conférence d'abonné CAi.1 à CAi.30. Dans le circuit CAi.1, l'entrée EL est reliée à l'entrée d'un circuit de sélection SW qui a son entrée de commande reliée par un faisceau MS à la sortie d'une mémoire de commande MC qui est reliée à l'unité de commande UC par une ligne SC. La sortie de données du circuit de sélection SW est reliée à l'entrée d'un circuit d'addition d'échantillons CAD.

La sortie du circuit CAD est reliée à l'entrée d'un circuit de compression COM dont la sortie est reliée, par la sortie SM, à la ligne de sortie LSi. Le circuit COM convertit chaque échantillon à seize bits délivré par le circuit d'addition d'échantillons CAD en un échantillon MIC.

La ligne de commande SC est encore reliée à l'entrée d'un circuit de signalisation SIG dont la sortie est aussi reliée à l'entrée du circuit de compression COM.

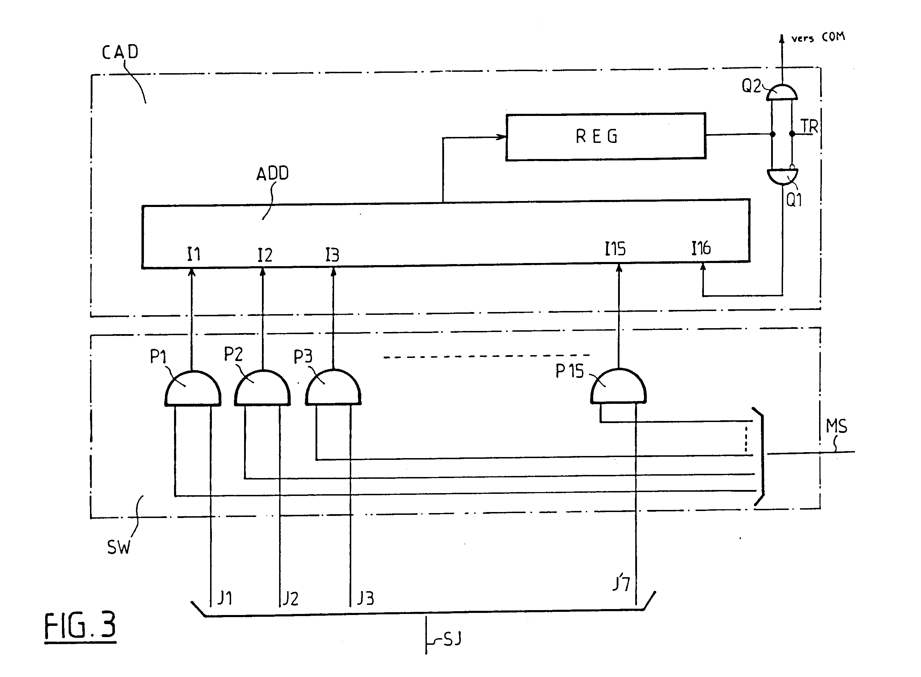

A la Fig. 3, le circuit de sélection SW comprend quinze portes ET P1 à P15 dont les premières entrées sont respectivement reliées aux jonctions J1 à J8 et J'1 à J'7 du faisceau SJ et dont les secondes entrées sont respectivement reliées par un faisceau MS de quinze fils de commande MS1 à MS15 reliées à des sorties correspondantes de la mémoire de commande MC. Les sorties des portes P1 à P15 sont respectivement reliées à quinze entrées I1 à I15 de l'additionneur ADD du circuit d'addition CAD. L'additionneur ADD a encore une seizième entrée I16 reliée à la sortie d'une porte ET Q1. La première entrée de la porte Q1 est reliée à la sortie d'un registre REG dont l'entrée est reliée à la sortie de l'additionneur ADD. La sortie du registre REG est aussi reliée à l'entrée d'une porte ET Q2 dont la sortie est reliée au circuit de compression COM. A la seconde entrée inversée de la porte Q1 et à l'entrée directe de la porte Q2, est appliqué le signal TR, qui sera décrit en détail plus loin. Ainsi, le circuit d'addition CAD comprend l'additionneur ADD, le registre REG et les portes Q1 et Q2.

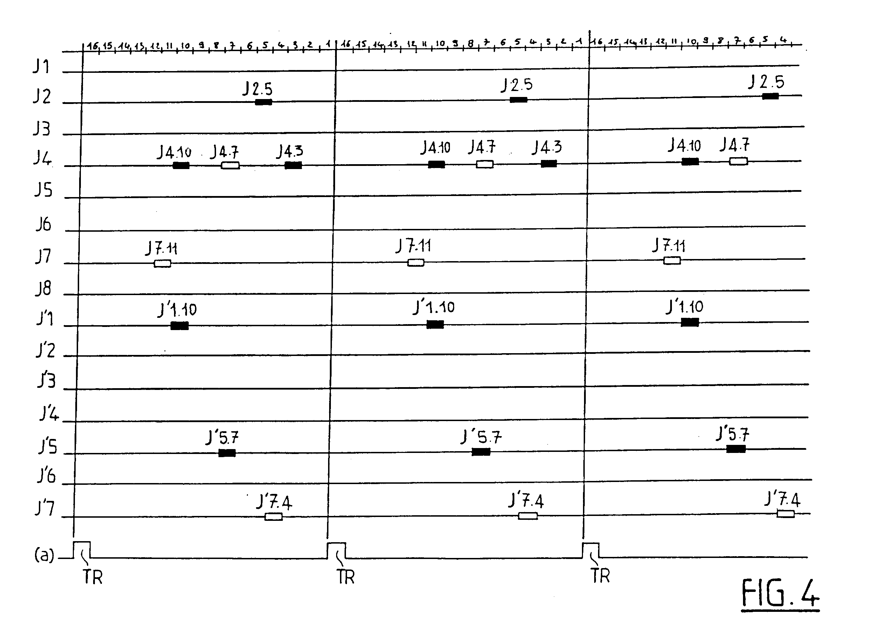

A la Fig. 4, on a montré que les échantillons à seize bits portés par les jonctions J1 à J8 et J'1 à J'7 du faisceau SJ étaient arrangés en trame de durée T égale à la durée d'une trame MIC. Sur chaque jonction, les trames sont synchrones. Dans l'exemple particulier décrit, il y a quinze échantillons utiles par trame, le seizième étant un échantillon nul. Sur le faisceau SJ, un échantillon peut être identifié par sa jonction Ji ou J'i et son rang j dans la trame. Un échantillon Ji.j ou J'i.j appartient à un seul abonné et l'identifie.

A la Fig. 4, on a particularisé les échantillons J2.5, J4.3, J4.10, J'1.10 et J'5.7 par des traits épais pour montrer que les cinq abonnés correspondants participent à une conférence, soit la conférence X. De même, on a particularisé les échantillons J4.7, J7.11 et J'7.4 par des petits rectangles vides pour montrer qu'ils correspondent à trois abonnés correspondants qui participent à une seconde conférence, soit la conférence Y.

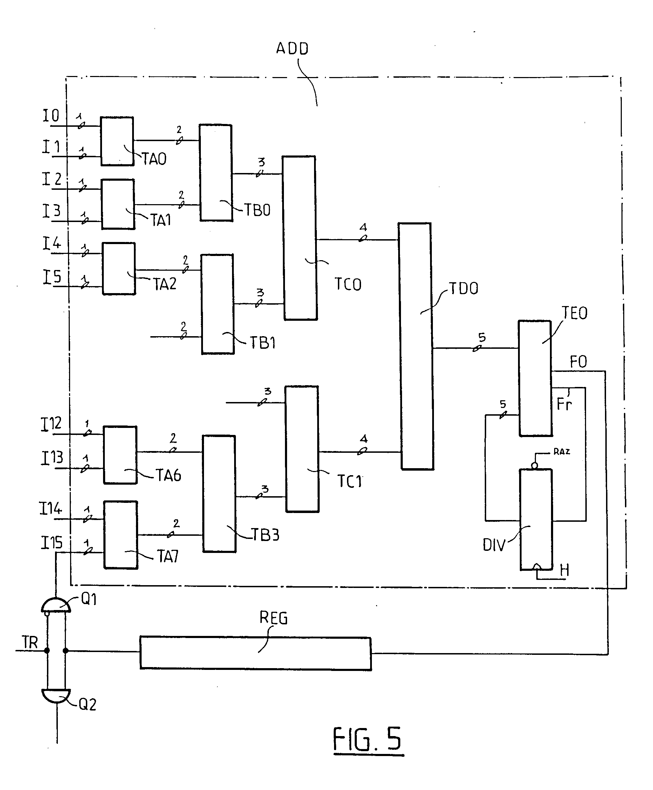

L' additionneur ADD, Fig. 5, comprend plusieurs séries d'additionneurs binaires élémentaires montés en cascade.

La première série est formée de huit additionneurs élémentaires de mots de un bit TA0 à TA7 ayant chacun deux entrées à un fil et une sortie à deux fils. L'additionneur TA0 a ses deux entrées respectivement reliées aux entrées I0 et I1, l'additionnneur TA1 a ses deux entrées respectivement reliées aux entrées I2 et I3, etc.

La seconde série est formée de quatre additionneurs élémentaires de mots de deux bits TB0 à TB4 ayant chacun deux entrées à deux fils et une sortie à trois fils. L'additionneur TB0 a ses deux entrées respectivement reliées aux sorties des additionneurs TA0 et TA1, l'additionneur TB1 a ses deux entrées respectivement reliées aux sorties des additionneurs TA2 et TA3, etc.

La troisième série est formée de deux additionneurs élémentaires de mots de trois bits TC0 et TC1 ayant chacun deux entrées à trois fils et une sortie à quatre fils. L'additionneur TC0 a ses deux entrées respectivement reliées aux sorties des additionneurs TB0 et TB1, etc.

La quatrième série ne comprend qu'un additionneur élémentaire de mots de quatre bits TD0 dont les entrées sont respectivement reliées aux sorties des additionneurs TC0 et TC1 et dont la sortie est à cinq fils.

La sortie de l'additionneur TD0 est reliée à une entrée d'un dernier additionneur de mots à cinq bits TE0 dont l'autre entrée est reliée aux sorties parallèles d'un tampon DIV. La sortie à six fils de l'additionneur TE0 se décompose en un fil F0 qui transmet le bit de poids le plus faible à l'entrée du registre REG et un faisceau de cinq fils Fr qui transmet les autres bits de poids plus forts aux entrées parallèles du tampon DIV. Le tampon DIV a une entrée d'horloge et une entrée de remise à zéro dont on décrira l'origine plus tard.

Afin d'illustrer le fonctionnement de l'additionneur ADD, on va d'abord considérer le cas d'une addition série de quatre mots M0 à M3 de six bits chacun. A titre d'exemple, ces mots sont les suivants:

M0 : 0 0 1 1 0 0 = 12 (en décimal)
M1 : 0 0 0 0 1 1 = 3 (en décimal)
M2 : 0 0 0 1 1 1 = 7 (en décimal)
M3 : 0 0 0 1 1 0 = 6 (en décimal)

Le tableau suivant montre l'addition de ces quatre nombres sous forme classique.

| rang des bits à additionner | 5 | 4 | 3 | 2 | 1 | 0 |
|---|---|---|---|---|---|---|
| r2 | 0 | 0 | 0 | 0 | 0 | 0 |
| r1 | 0 | 0 | 1 | 1 | 0 | 0 |
| r0 | 0 | 1 | 0 | 0 | 1 | 0 |
| M0 | 0 | 0 | 1 | 1 | 0 | 0 |
| M1 | 0 | 0 | 0 | 0 | 1 | 1 |
| M2 | 0 | 0 | 0 | 1 | 1 | 1 |
| M3 | 0 | 0 | 0 | 1 | 1 | 0 |
| S | 0 | 1 | 1 | 1 | 0 | 0 |

où r2, r1 et r0 sont les représentations binaires des retenues. On a bien S = 28 (en décimal).

L'exemple de calcul ci-dessus montre que les opérations de calcul suivent les règles suivantes:

instant t0 : somme des bits de rang 0,
: conservation du bit de poids le plus faible en tant que première somme résultante,
: utilisation des bits de poids plus forts comme retenue de rang plus élevé;

instant t1 : somme des bits de rang 1 et de la retenue déterminée au rang 0,
: conservation du bit de poids faible,
: utilisation des bits de poids plus forts en tant que retenue de rang plus élevé;

aux instants t2, t3, t4 et t5, les traitement sont les mêmes qu'à l'instant t1.

L'homme de métier comprendra que le mode de réalisation de l'addition qui vient d'être décrit s'étend à des nombres de plus de six bits, par exemple à des mots de seize bits, tels qu'on les a définis plus haut. Il comprendra également que les nombres à additionner peuvent être plus de quatre. C'est ce qui est prévu dans l'additionneur ADD de la Fig. 5.

Le mode de réalisation de l'addition qui vient d'être décrit implique:

- une addition série, quand on considère les poids binaires, et
- une addition parallèle, quand on considère le nombre des entrées du circuit d'addition.

Ce mode d'addition n'est donc pas limitatif en nombre d'accès parallèles simultanés. Il n'est pas non plus limitatif en ce qui concerne le nombre de bits par échantillon.

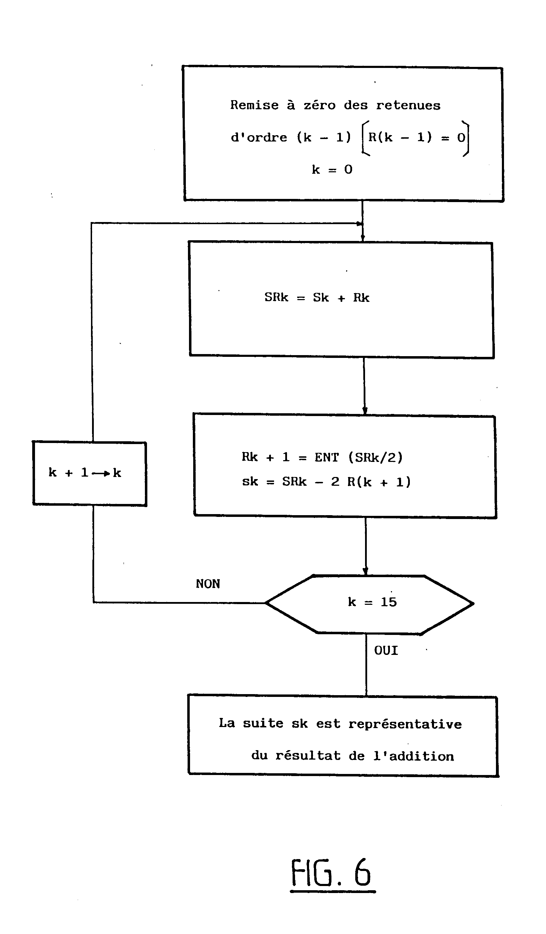

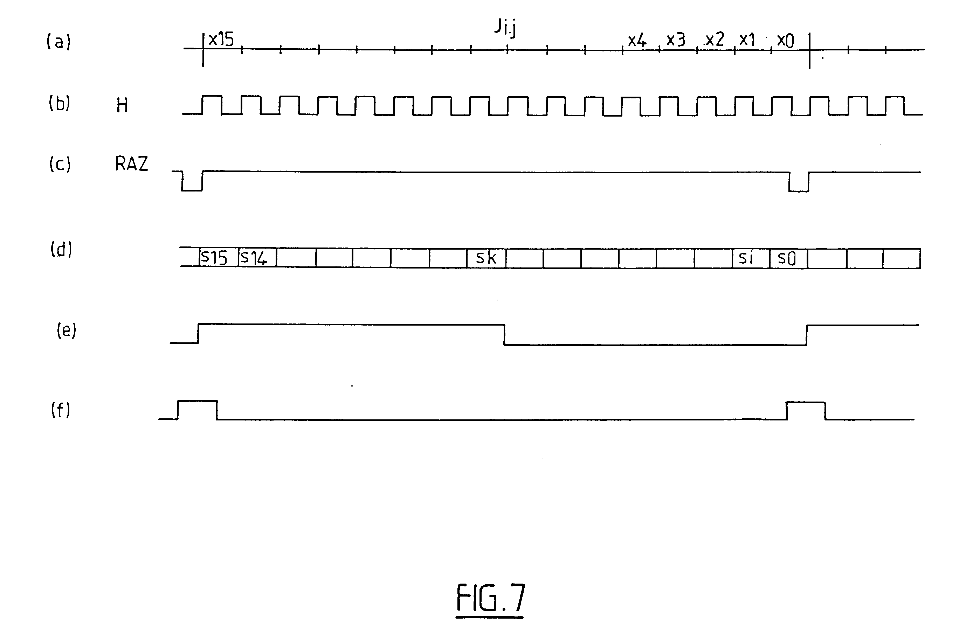

L'organigramme de la Fig. 6 et les diagrammes temporels de la Fig. 7 illustrent le fonctionnement du circuit d'addition de la Fig. 5. A la Fig. 7, on a représenté en (a) l'échantillon Ji.j du multiplex Ji local. Cet échantillon comprend, comme les autres, seize bits x0 à x15. Le diagramme (b) représente le signal d'horloge locale bit H appliqué à l'entrée correspondante du tampon DIV. Le diagramme (c) représente le signal RAZ délivré dans la première demi-période du bit x0 et qui est appliqué à l'entrée correspondante du tampon DIV.

Comme le montre l'organigramme de la Fig. 6, le signal RAZ remet le contenu du tampon DIV à zéro pendant le premier demi-temps du bit x0, où encore quand k = 0, $\underline{k}$ représentant le rang d'un bit dans un échantillon.

Pendant la période d'horloge H de rang $\underline{k}$, la cascade des additionneurs élémentaires du circuit d'addition fonctionne et l'additionneur élémentaire $\overline{TE0}$ délivre:

$$SRk = Sk + Rk$$

où Sk est la somme des 16 éléments binaires entrants de rang $\underline{k}$ et Rk est la retenue disponible à l'instant k à la sortie du tampon DIV, c'est-à-dire la retenue sur les calculs de rang (k-1).

Si l'on appelle R(k+1) la partie entière de SRk/2 et $\underline{sk}$ le bit de poids le plus faible de SRk, on a:

$$sk = SRk - 2R(k+1)$$

Un cycle élémentaire de travail de l'additionneur ADD correspond donc à l'obtention de SRk, de R-(k+1) et de $\underline{sk}$, le test k = 15 ou non, et à la transposition k = k+1. La suite des $\underline{sk}$ représente le résultat de l'addition au bout d'un cycle. Par ailleurs, on rappelle qu'à l'instant k = 0, le nombre R15 est remis à zéro dans le tampon DIV.

Le rôle du tampon DIV est donc d'obtenir R(k+1) à partir de SRk. A chaque impulsion H, les bits d'entrée correspondant aux cinq poids les plus forts du mot délivré par l'additionneur TE0 sont délivrés à la sortie du tampon DIV, mais en prenant les poids 1 à 5 du mot appliqué à la seconde entrée de l'additionneur TE0. Il y a donc division par deux simplement par la traversée du tampon DIV. L'association du tampon DIV et la séparation des fils à la sortie de TE0 permet d'avoir sk, d'une part, et (SRk-sk), d'autre part.

La suite des sk est mémorisée dans le registre REG, qui est un registre à décalage à seize cellules fonctionnant au rythme de l'horloge H. A la fin de l'échantillon Ji.j, le registre REG contient donc le résultat de l'addition sur les échantillons de rangs 1 à j qui ont été appliqués aux entrées E1 à E15 depuis le début de la trame considérée. Au rang d'échantillon (j + 1), le cycle est de la Fig. 6 est repris, les échantillons de rang (j + 1) appliqués aux entrées I0 à I14 sont ajoutés ensemble et avec le résultat partiel délivré par le registre REG.

Comme le montre le diagramme (a) de la Fig. 4, pendant la durée du dernier échantillon de chaque trame de multiplex local, le signal TR est au niveau haut et pendant le temps des autres échantillons au niveau bas. Le signal TR est appliqué aux secondes entrées des portes Q1 et Q2 du circuit d'addition CAD, Fig. 3. Il en résulte que, quand le signal TR est au niveau haut, la sortie de la porte Q1 est au niveau bas, c'est-à-dire que l'entrée I16 de l'additionneur ADD reste au niveau "0" pendant l'échantillon, ce qui remet à zéro le résultat précédent, alors que la porte Q2 est ouverte ce qui permet de délivrer le résultat de l'addition au circuit de compression COM.

La mémoire MC de chaque circuit de conférence d'abonné CAi.j contient une suite de quinze mots de quinze bits chacun, qui sont lus au rythme de l'horloge échantillon et qui reste disponibles à la sortie de la mémoire MC, c'est-à-dire sur le faisceau MS, pendant la durée d'un échantillon.

A titre d'exemple, si l'on considère l'abonné identifié par l'échantillon J2.5 à la Fig. 4, la suite des mots m01 à m15 enregistrés dans la mémoire de commande MC du circuit de conférence d'abonné CA2.5 sera la suivante:

```
m01    0 0 0 0 0 0 0 0 0 0 0 0 0 0 0

m02    0 0 0 0 0 0 0 0 0 0 0 0 0 0 0

m03    0 0 0 1 0 0 0 0 0 0 0 0 0 0 0

m04    0 0 0 0 0 0 0 0 0 0 0 0 0 0 0

m05    0 0 0 0 0 0 0 0 0 0 0 0 0 0 0

m06    0 0 0 0 0 0 0 0 0 0 0 0 0 0 0

m07    0 0 0 0 0 0 0 0 0 0 0 0 1 0 0

m08    0 0 0 0 0 0 0 0 0 0 0 0 0 0 0

m09    0 0 0 0 0 0 0 0 0 0 0 0 0 0 0

m10    0 0 0 1 0 0 0 0 1 0 0 0 0 0 0

m11    0 0 0 0 0 0 0 0 0 0 0 0 0 0 0

m12    0 0 0 0 0 0 0 0 0 0 0 0 0 0 0

m13    0 0 0 0 0 0 0 0 0 0 0 0 0 0 0

m14    0 0 0 0 0 0 0 0 0 0 0 0 0 0 0

m15    0 0 0 0 0 0 0 0 0 0 0 0 0 0 0
```

Il apparaît que, dans la suite ci-dessus, le mot m03 comporte un bit "1" en $4^e$ position, le mot m07 comporte un bit "1" en $13^e$ position et le mot m10 comporte deux bits "1", l'un en $4^e$ position et l'autre en $9^e$, tous les autres bits étant à "0". Le faisceau MS est relié à la sortie de la mémoire MC et les portes P0 à P15 ne sont ouvertes que quand leurs secondes entrées sont au niveau haut, c'est-à-dire par les bits "1" de la suite montrée ci-dessus. On voit donc que le circuit d'addition CAD du circuit CA2.5 va effectuer l'addition des échantillons J4.3, J'5.7, J4.10 et J'1.10. Il en résulte que ce circuit d'addition va délivrer la somme des échantillons de parole des participants de la conférence X, sauf l'échantillon de parole de l'abonné auquel correspond le circuit CA2.5.

On pourrait écrire une suite de mots semblables pour le circuit de conférence d'abonné CA15.4 dont l'abonné participe à la conférence Y, définie plus haut. Mais cela semble inutile car évident pour l'homme de métier.

On retiendra de ce qui précède qu'il suffit d'établir une suite de mots dans une mémoire MC d'un circuit CAi.j pour faire participer l'abonné à une conférence et qu'il recevra la somme des signaux émis par tous les participants à la conférence, sauf les siens.

Il apparaît également que le nombre de conférences que l'on peut établir est quelconque, sauf qu'un participant ne saurait normalement participer qu'à une conférence à la fois, encore que l'écoute de plusieurs conférences à la fois est concevable.

Il apparaît enfin que le nombre de participants à une conférence n'est pratiquement limité que par la capacité des trames et le nombre de multiplex locaux, ici 15x15. Les multiplex locaux, étant des sortes de bus locaux, peuvent avoir une grande bande passante et donc un débit nettement plus élevé que celui des multiplex MIC. On pourrait dont facilement augmenter les capacités des trames locales au-delà de quinze. D'autre part, comme on l'a mentionné plus haut, l'additionneur ADD pourrait avoir 32 entrées au lieu de 16, ou même plus, les circuits logiques disponibles sur le marché ayant des vitesses telles que la suite d'additions pourraient être facilement effectuée dans le temps d'un échantillon.

Dans l'exemple de réalisation qui vient d'être décrit en détail, on a supposé que le système de mise en conférences échangeait avec le réseau de télécommunications externe des signaux MIC, ce qui entraînait, premièrement, une conversion d'échantillons MIC en échantillons linéaires et, deuxièmement, des groupes de trente circuits individuels de conférence par multiplex MIC. L'homme de métier comprendra que le système de l'invention pourrait aussi fonctionner avec des lignes d'abonnés analogiques, chaque circuit individuel comprenant un circuit d'échantillonnage du signal vocal analogique et un circuit de conversion numérique/analogique au lieu respectivement des circuits EXP et COM. Dans ce cas, un groupe de circuits individuels peut comprendre un nombre de circuits différent de trente et les trames des multiplex locaux un nombre d'échantillons différent de quinze.

A la Fig. 1, on a aussi montré que l'unité de commande UC délivrait les signaux d'horloge et de synchronisation, tels que l'horloge bit H, l'horloge échantillon CH, montrée en (e) à la Fig. 7, le signal TR, montré en (a) à la Fig. 7, et les signaux de synchronisation trame SYi et SY'i. Elle délivre également le signal de commande de lecture/écriture montré en (f) à la Fig. 7.

La période du signal de lecture/écriture est égale à celle de l'horloge d'échantillon. Le signal est au niveau haut pendant la première moitié du bit x0 de chaque échantillon ce qui provoque la lecture du mot de rang j, correspondant aux échantillons de rang j, qui est enregistré dans la mémoire de commande MC. Ce mot reste présent à la sortie de la mémoire pendant toute la durée des échantillons de rang j. En pratique, à la sortie de la mémoire MC, est prévu une série de latchs qui concervent ce mot. Au début des échantillons de rang (j + 1), c'est le mot de rang (j + 1) qui sera lu, etc. Par ailleurs, pendant le reste de la durée de l'échantillon, le signal de lecture/écriture est au niveau bas, ce qui permet éventuellement à l'unité de commande UC d'écrire dans la mémoire une nouvelle suite de mots modifiant ainsi une conférence. L'unité de commande UC pourrait, pendant le même temps, lire le contenu de la mémoire suivant une méthode classique.

Le système décrit en détail ci-dessus concernait un système de conférence téléphonique. Mais il doit être bien entendu qu'il ne s'agit que d'une application particulière et qu'il peut s'appliquer également à un système de transmission de données, les participants étant alors remplacés par des accès de données linéaires, le système n'étant, par nature, limitatif ni en ce qui concerne la longueur de chaque échantillon, ni en ce qui concerne le nombre de multiplex.

Dans l'exemple de réalisation décrit, notamment en relation avec la Fig. 1, le circuit de participant est localisé au niveau de l'accès participant, mais il peut aussi être centralisé avec une liaison LCi, en entrée, et une liaison LSi, en sortie, raccordés à chaque participant.

Dans ce qui précède on a également supposé que le nombre d'entrée de l'additionneur était égal à une puissance de deux, soit $2^n$, mais cela n'est pas obligatoire. Des nombres d'entrée différents peuvent être utilisés.

## Revendications

1. Circuit de mise en conférences d'une pluralité de participants utilisable dans des systèmes de télécommunications, les signaux émis par les participants étant numérisés linéairement, à chaque participant étant affectés des circuits portes (P1-P15) dont les premières entrées reçoivent les signaux numérisés des participants, dont les secondes entrées sont reliées à un circuit de sélection d'échantillons (SW) et dont les sorties sont reliées à un circuit d'addition algébrique (CAD), caractérisé en ce que lesdits signaux numérisés linéairement sont arrangés en trames temporelles et portés sur une pluralité de multiplex temporels (J1 à J8 et J'1 à J'7), à chaque participant étant affecté un circuit de participant

7

(CAi.1-30) qui comprend le circuit de sélection d'échantillons (SW), le circuit d'addition algébrique (CAD) et un circuit de conversion (COM) de la somme numérique délivrée par le circuit d'addition algébrique (CAD) en signal de parole transmis au participant correspondant, le circuit de sélection d'échantillons (SW) comportant autant de circuits portes (P1-P15) que de multiplex temporels, lesdits circuits portes (P1-P15) étant ouverts sélectivement à des instants déterminés dans chaque trame temporelle pour sélecter dans la pluralité de multiplex temporels les échantillons qui proviennent des autres participants faisant partie de la même conférence que le participant correspondant et qui sont à appliquer au circuit d'addition algébrique (CAD), chaque circuit de sélection d'échantillons (SW) étant couplé à un circuit de commande à mémoire (MC) dont la sortie commande les instants d'ouverture des circuits portes (P1-P15), le contenu de la mémoire du circuit de commande à mémoire (MC) étant modifiable, chaque circuit d'addition algébrique (CAD) comprenant un additionneur (ADD) qui a autant d'entrées (I1-I15) que de multiplex temporels, plus une dernière (I16), les échantillons étant appliqués aux entrées correspondantes (I1-I15) en série avec leurs bits de poids faible en tête, les bits de même poids étant additionnés au cours d'un temps bit et le bit de poids le plus faible de la somme partielle obtenue étant appliqué à la dernière entrée (I16) de l'additionneur (ADD) au temps échantillon suivant, et le reste de la somme partielle étant divisée par deux et ajoutée à la somme des bits additionnés au temps bit suivant, l'additionneur (ADD) délivrant au circuit de conversion (COM) ladite somme numérique une fois les bits de poids le plus fort additionnés.

2. Circuit de mise en conférences suivant la revendication 1, caractérisé en ce que chaque additionneur (ADD) a $2^n$ entrées (I1 à I16) et se compose de n séries d'additionneurs élémentaires montés en cascade, la première série comportant $2^{(n-1)}$ additionneurs élémentaires (TA0 à TA7) à deux entrées à un fil respectivement reliées à deux entrées de l'additionneur et une sortie à deux fils, la seconde série comportant $2^{(n-2)}$ additionneurs élémentaires (TB0 à TB3) à deux entrées à deux fils reliées respectivement aux sorties de deux additionneurs de la première série et une sortie à trois fils, ..., la $n^e$ série comportant un additionneur élémentaire (TD0) à deux entrées à n fils reliées respectivement aux sorties des deux additionneurs élémentaires (TC0, TC1) de la $(n-1)^e$ série et une sortie à (n + 1) fils qui est reliée à la première entrée d'un additionneur élémentaire supplémentaire (TE0) dont la seconde entrée est reliée à la sortie d'un tampon (DIV) à (n + 1) cellules et dont le faisceau de sortie à (n + 2) fils est divisé en un fil (F0) transmettant le bit de poids le plus faible et en un faisceau (Fr) de (n + 1) fils relié à l'entrée dudit tampon (DIV) dont l'entrée d'horloge reçoit le signal d'horloge bit et dont l'entrée de remise à zéro reçoit le signal RAZ à la fin de chaque échantillon, le fil FO étant relié à l'entrée d'un registre (REG) à n étages dont la sortie est reliée à la dernière entrée (I16) de l'additionneur (ADD) par un premier circuit ET qui est fermée pendant le premier temps d'échantillon d'une trame et ouverte le reste de la trame.

3. Circuit de mise en conférences suivant la revendication 2, caractérisé en ce que la sortie dudit registre à décalage (REG) est reliée à un second circuit ET qui est ouvert pendant le premier temps d'échantillon de chaque trame et fermé le reste de la trame.

4. Circuit de mise en conférences suivant l'une des revendications 1 à 3, caractérisé en ce que le contenu de la mémoire du circuit de commande à mémoire (MC) est une suite de mots binaires, chaque mot contenant autant de bits que de multiplex temporels et la suite comprenant autant de mots que d'échantillons d'une trame temporelle, chaque bit correspondant à un échantillon sur un multiplex temporel et occupant le même rang dans les trames temporelles successives, la suite des mots étant lue au rythme de l'horloge échantillon, un bit à "1" présenté à la sortie de ladite mémoire provoquant l'ouverture d'un des circuits portes (P1-P15) et chaque bit à "0" maintenant fermée le circuit porte correspondant.

5. Circuit de mise en conférences suivant la revendication 4, caractérisé en ce que chaque mot de la suite est lu pendant la première moitié du premier bit d'un échantillon et reste présent à la sortie de la mémoire pendant le reste du temps de l'échantillon, le contenu de la mémoire pouvant être modifié quand elle n'est pas en mode de lecture.

6. Circuit de mise en conférences suivant l'une des revendications 1 à 5, caractérisé en ce que les signaux numérisés linéairement sont obtenus par encodage de signaux analogiques émis par les participants.

8

**EP 0 317 463 B1**

7. Circuit de mise en conférences suivant l'une des revendications 1 à 5, caractérisé en ce que les signaux numérisés linéairement sont obtenus par extension de mots MIC émis par les participants.

**Claims**

1. A putting in conference circuit for a plurality of participants usable in systems of telecommunications, the signals emitted by the participants being numbered linearly, to each participant being allocated gate circuits (P1 - P/5) the first inputs of which receive the numbered signals of the participants, the second inputs of which are connected to a sample selection circuit (SW) and the outputs of which are connected to an algebraic addition circuit (CAD), characterized in that the said linearly numbered signals are arranged in time rasters and carried on a plurality of time multiplexes (J1 to J8 and J'1 to J'7), to each participant being allocated a participant circuit (CAi.1 - 30) which comprises the sample selection circuit (SW), the algebraic addition circuit (CAD) and a conversion circuit (COM) of the numerical sum delivered by the algebraic addition circuit (CAD) in speech signal transmitted to the corresponding participant, the sample selection circuit (SW) comprising as many gate circuits (P1 - P15) as time multiplexes, the said gate circuits (P1 - P15) being opened selectively at determined instants in each time raster in order to select in the plurality of time multiplexes the samples which come from the other participants forming part of the same conference as the corresponding participant and which are to be applied to the algebraic addition circuit (CAD), each sample selection circuit (SW) being coupled to a memory control circuit (MC) the output of which controls the instants of opening of the gate circuits (P1 - P15), the contents of the memory of the memory control circuit (MC) being modifiable, each algebraic addition circuit (CAD) comprising an adder (ADD) which has as many inputs (I1 - I15) as time multiplexes plus a last one (I16), the samples being applied to the corresponding inputs (I1 - I15) in series with their leading bits of light weight, the bits of the same weight being added in the course of a bit time and the bit of lightest weight of the partial sum obtained being applied to the last input (I16) of the adder (ADD) to the following sample time and the remainder of the partial sum being divided by two and added to the sum of the bits added to the following bit time, the adder (ADD) delivering to the conversion circuit (COM) the said numerical sum once the heaviest bits are added.

2. A putting in conference circuit according to claim 1, characterised in that each adder (ADD) has $2^n$ inputs (I1 to I16) and is composed of n series of elementary adders mounted in cascade, the first series comprising $2^{(n-1)}$ elementary adders ($\overline{T}A0$ to TA7) with two inputs with one wire respectively connected to two inputs with one wire respectively connected to two inputs of the adder and an output with two wires, the second series comprising $2^{(n-2)}$ elementary adders (TB0 to TB3) with two inputs with two wires connected respectively to the outputs of two adders of the first series and an output with three wires ..., the $n^e$ series comprising an elementary adder (TD0) with two inputs with n wires connected respectively to the outputs of the two elementary adders (TC0, TC1) of the $(n-1)^e$ series and one output with (n + 1) wires which is connected to the first input of a supplementary elementary adder (TE0) the second input of which is connected to the output of a plug (DIV) with (n + 1) cells and the output beam of which with (n + 2) wires is divided into a wire (FO) transmitting the bit of lightest weight and into a beam (Fr) of (n + 1) wires connected to the input of the said plug (DIV) the clock input of which receives the clock bit signal and the resetting to zero input of which receives the RAZ signal at the end of each sample, the wire FO being connected to the input of a register (REG) with n stages the output of which is connected to the last input (I16) of the adder (ADD) by a first AND circu$\overline{\overline{\imath}}$t which is closed during the first sample time of a raster and open the rest of the raster.

3. A putting in conference circuit according to claim 2, characterised in that the output of the said staggering register (REG) is connected to a second AND circuit which is open during the first sample time of each raster and closed the rest of the raster.

4. A putting in conference circuit according to one of the claims 1 to 3, characterised in that the contents of the memory of the memory control circuit (MC) is a sequence of binary words, each word containing as many bits as time multiplexes and the sequence comprising as many words as samples of a time raster, each bit corresponding to a sample on a time multiplex and occupying the same row in the successive time rasters, the sequence of the words being read at the rhythm of the sample clock, a bit with "1" presented at the output of the said memory causing the closing of one of the gate circuits (P1 - P15) and each bit with "0" keeping closed the corresponding gate circuit.

5. A putting in conference circuit according to claim 4, characterized in that each word of the section is read during the first half of the first bit of a sample and remains present at the output of the memory during the remainder of the sample time, the contents of the memory being capable of being modified when it is not in reading mode.

6. A putting in conference circuit according to one of the claims 1 to 5, characterized in that the linearly numbered signals are obtained by encoding of analogical signals emitted by the participants.

7. A putting in conference circuit according to one of the claims 1 to 5, characterised in that the linearly numbered signals are obtained by extension of PCM words emitted by the participants.

**Patentansprüche**

1. Schaltungsanordnung zur Herstellung einer Konferenzschaltung für eine Mehrzahl von Teilnehmern, welches in Telekommunikationssystemen einsetzbar ist, bei der die von den Teilnehmern abgegebenen Signale linear numeriert werden, die jedem Teilnehmer Verknüpfungsschaltungen (P1 - P15) zugewiesen sind, deren erste Eingänge die numerierten Signale der Teilnehmer empfangen, während zweite Eingänge mit einer Abtastwählschaltung (SW) verbunden sind und deren Ausgänge mit einer algebraischen Addierschaltung (CAD) verbunden sind, **dadurch gekennzeichnet,** daß die linear numerierten Signale in Zeitrastern angeordnet und auf einer Mehrzahl von Zeitvielfachen (J1 bis J8 und J'1 bis J'7) angeordnet sind, jedem Teilnehmer eine Teilnehmerschaltung (CAi.1 - 30) zugewiesen ist, welche die Abtastwählschaltung (SW), die algebraische Addierschaltung (CAD) und eine Wandlerschaltung (COM) für die numerische Summe aufweist, die von der algebraischen Addierschaltung (CAD) im Sprachsignal abgegeben wird, das zum zugeordneten Teilnehmer übertragen wird, die Abtastwählschaltung (SW) so viele Verknüpfungsschaltungen (P1 - P15) wie Zeitvielfache aufweist, die Verknüpfungsschaltungen (P1 - P15) selektiv zu bestimmten Zeitpunkten im jeweiligen Zeitraster geöffnet werden, um aus der Vielzahl von Zeitvielfachen die Abtastungen auszuwählen, welche von anderen an der gleichen Konferenz teilnehmenden Teilnehmern unter Zuordnung zum Teilnehmer kommen, und die an die algebraische Addierschaltung (CAD) anzulegen sind, jede Abtastwählschaltung (SW) mit einer Speichersteuerschaltung (MC) verbunden ist, deren Ausgang die Öffnungszeitpunkte der Verknüpfungsschaltungen (P1 - P15) steuert, die Inhalte des Speichers der Speichersteuerschaltung (MC) modifizierbar sind, jede algebraische Addierschaltung (CAD) einen Addierer (ADD) aufweist, welcher so viele Eingänge (I1 bis I15) wie Zeitvielfache plus einen letzten weiteren (I16) hat, die Abtastungen an die zugeordneten Eingänge (I1 - I15) in Reihe mit ihren führenden Bits niedriger Wertigkeit angelegt werden, die Bits gleicher Wertigkeit im Laufe eines Zeitbits addiert werden, und das Bit der niedrigsten Wertigkeit der erhaltenen Teilsumme an den letzten Eingang (I16) des Addierers (ADD) in der folgenden Abtastzeit angelegt wird und der Rest der Teilsumme durch zwei dividiert und zu der Bitsumme addiert wird, welche zu dem folgenden Zeitbit addiert wird, und daß der Addierer (ADD) die numerische Summe andie Wandlerschaltung (COM) abgibt, sobald Bits der höchsten Wertigkeit addiert sind.

2. Schaltungsanordnung nach Anspruch 1, dadurch gekennzeichnet, daß jeder Addierer (ADD) $2^n$ Eingänge (I1 - I16) hat und n-Reihen von in Kaskade geschalteten Elementaraddierern aufweist, die ersten Reihen $2^{(n-1)}$ Elementaraddierer (TA0 bis TA7) mit zwei Eingängen aufweist, wobei eine Leitung jeweils mit zwei Eingängen des Addierers verbunden ist und ein Ausgang mit zwei Leitungen verbunden ist, die zweiten Reihen $2^{(n-2)}$ Elementaraddierer (TB0 bis TB3) mit zwei Eingängen aufweisen, wobei zwei Leitungen jeweils mit den Ausgängen von zwei Addierern der ersten Reihen verbunden sind und ein Ausgang mit drei Leitungen verbunden ist, die $n^e$-Reihen einen Elementaraddierer (TD0) mit zwei Eingängen aufweisen, wobei n-Leitungen jeweils mit den Ausgängen der beiden Elementaraddierer (TC0, TC1) der $(n-1)^e$-Reihen verbunden sind und ein Ausgang mit $(n+1)$-Leitungen verbunden ist, welche mit dem ersten Eingang eines supplementären Elementaraddierers (TE0) verbunden sind, dessen zweiter Eingang mit dem Ausgang eines Puffers (DIV) mit $(n+1)$-Zellen verbunden ist und dessen Ausgangsleitung mit $(n+2)$-Leitungen in eine Leitung (FO), welche das Bit der niedrigsten Wertigkeit überträgt und in eine Leitung (Fr) mit $(n+1)$-Leitungen unterteilt ist, die mit dem Eingang des Puffers (DIV) verbunden sind, dessen Takteingang das Taktbitsignal erhält und dessen Nullrücksetzeingang das RAZ-Signal am Ende jeder Abtastung erhält, und die Leitung (FO) mit dem Eingang eines Registers (REG) mit n-Stufen verbunden ist, dessen Ausgang mit dem letzten Eingang (I16) des Addierers (ADD) über eine erste UND-Schaltung verbunden ist, welche während der ersten Abtastzeit eines Rasters geschlossen und während des Rests des Rasters offen ist.

3.	Schaltungsanordnung nach Anspruch 2, dadurch gekennzeichnet, daß der Ausgang des Schieberegisters (REG) mit einer zweiten UND-Schaltung verbunden ist, welche während der ersten Abtastzeit jedes Rasters offen und während der restlichen Zeit des Rasters geschlossen ist.

4.	Schaltungsanordnung nach einem der Ansprüche 1 bis 3, dadurch gekennzeichnet, daß die Inhalte des Speichers der Speichersteuerschaltung (MC) eine Sequenz von binären Worten ist, jedes Wort soviele Bits wie Zeitvielfache enthält und die Sequenz soviele Worte wie Abtastungen eines Zeitrasters aufweist, jedes Bit einer Abtastung bei einem Zeitvielfachen zugeordnet ist und die gleiche Reihe in den aufeinanderfolgenden Zeitrastern einnimmt, die Sequenz der Worte mit dem Takt des Abtasttakts gelesen wird, ein Bit mit "1" am Ausgang des Speichers das Schließen einer der Verknüpfungsschaltungen (P1 - P15) bewirkt und jedes Bit mit "0" die zugeordnete Verknüpfungsschaltung geschlossen hält.

5.	Schaltungsanordnung nach Anspruch 4, dadurch gekennzeichnet, daß jedes Wort des Teils während der ersten Hälfte des ersten Bits einer Abtastung gelesen wird und am Ausgang des Speichers während des Rests der Abtastzeit beibehalten wird, und daß die Inhalte des Speichers modifiziert werden können, wenn er sich nicht in der Lesebetriebsart befindet.

6.	Schaltungsanordnung nach einem der Ansprüche 1 bis 5, dadurch gekennzeichnet, daß die linear numerierten Signale durch Codieren von Analogsignalen erhalten werden, die von den Teilnehmern abgegeben werden.

7.	Schaltungsanordnung nach einem der Ansprüche 1 bis 5, dadurch gekennzeichnet, daß die linear numerierten Signale durch Verlängerung der Puls-Code-Modulationsworte erhalten werden, die von den Teilnehmern abgegeben werden.

FIG. 1

EP 0 317 463 B1

FIG. 2

EP 0 317 463 B1

EP 0 317 463 B1

FIG.3

FIG.4

FIG. 5

Remise à zéro des retenues

d'ordre (k − 1) $\left[ R(k - 1) = 0 \right]$

k = 0

SRk = Sk + Rk

k + 1 ⟶ k

Rk + 1 = ENT (SRk/2)

sk = SRk − 2 R(k + 1)

NON

k = 15

OUI

La suite sk est représentative

du résultat de l'addition

# FIG. 6

17

FIG.7

EP 0 317 463 B1